# EUROPEAN PATENT APPLICATION

(11) **EP 3 000 669 A2**
(43) Date of publication of application: **30.03.2016**
(21) Application number: 15153871.7
(22) Date of filing: 05.02.2015
(51) Int. Cl.: B60T 7/06, G05G 1/42

(54) **Motor vehicle pedal and method for adjusting motor vehicle pedal**

(30) Priority: 19.08.2014 CN 201410409945
(71) Applicant: Beiqi Foton Motor Co., Ltd., Beijing 102206 (CN)
(72) Inventor: Jin, Dawei, Changping District (CN); Yang, Yaning, Changping District (CN)
(74) Representative: Grünecker Patent- und Rechtsanwälte PartG mbB

(57) **Abstract**

The present invention provides a motor vehicle pedal and a method for adjusting a motor vehicle pedal, where the motor vehicle pedal includes a fixed base, and the motor vehicle pedal further includes: a pedal arm, including a first pedal arm fixedly connected to the fixed base and a second pedal arm movably disposed along an extending direction of the first pedal arm; and a control assembly, electrically connected to the pedal arm, where the control assembly includes a controller body, a memory apparatus and an information acquisition apparatus, and the controller body is capable of acquiring, according to control information acquired by the information acquisition apparatus, a memorized position that is recorded by the memory apparatus and corresponds to the control information, and controlling the second pedal arm to move to the memorized position. By means of the motor vehicle pedal of the present invention, a control assembly is set, control information acquired by an information acquisition apparatus is made to correspond to a memorized position recorded by a memory apparatus, and after a position of a second pedal arm changes, a controller body is capable of directly adjusting, according to corresponding control information, the second pedal arm to a corresponding recorded position, so as to achieve an objective of saving adjustment time.

## Description

### BACKGROUND

### Technical Field

The present invention relates to the field of vehicles, and in particular, to a motor vehicle pedal and a method for adjusting a motor vehicle pedal.

### Related Art

In the prior art, when different drivers operate a same vehicle, they adjust a height of a motor vehicle pedal according to their own usage habits, which causes that each time before driving a vehicle, a driver needs to spend certain time in looking for a pedal height suitable for the driver. Adjustment operations are time-consuming and accumulated time is much, which causes a waste of time.

### SUMMARY

The present invention aims to provide a motor vehicle pedal and a method for adjusting a motor vehicle pedal, so as to achieve an objective of saving adjustment time.

In order to achieve the foregoing objective, the present invention provides a motor vehicle pedal, where the motor vehicle pedal includes a fixed base, and the motor vehicle pedal further includes: a pedal arm, including a first pedal arm fixedly connected to the fixed base and a second pedal arm movably disposed along an extending direction of the first pedal arm; and a control assembly, electrically connected to the pedal arm, where the control assembly includes a controller body, a memory apparatus and an information acquisition apparatus, and the controller body is capable of acquiring, according to control information acquired by the information acquisition apparatus, a memorized position that is recorded by the memory apparatus and corresponds to the control information, and controlling the second pedal arm to move to the memorized position.

Further, the information acquisition apparatus includes a position sensor, and the control information includes position information, detected by the position sensor, of a reference object.

Further, the reference object includes a motor vehicle seat.

Further, the pedal arm includes a drive assembly for driving the second pedal arm to move, and the controller body is electrically connected to the drive assembly.

Further, the control assembly further includes a control panel connected to the controller body, and the information acquisition apparatus includes selection buttons disposed on the control panel.

Further, multiple selection buttons are disposed on the control panel, and each selection button corresponds to one memorized position.

The present invention further provides a method for adjusting a motor vehicle pedal, where the motor vehicle pedal is the foregoing motor vehicle pedal, and the method for adjusting a motor vehicle pedal includes the following steps: S10: acquiring the control information by using the information acquisition apparatus; S20: acquiring, by the controller body, according to the control information, the memorized position that is recorded by a memory apparatus and corresponds to the control information; and S30: controlling, by the controller body, the second pedal arm to be adjusted to the memorized position.

Further, the control assembly further includes a control panel connected to the controller body, and the information acquisition apparatus includes multiple selection buttons disposed on the control panel, where before step S10, the adjusting method further includes step S1: making each selection button correspond to one piece of first control information, where each first control information corresponds to one memorized position; and step S10 includes acquiring corresponding first control information by acquiring a closed state of the multiple selection buttons, where the control information includes the first control information.

Further, the information acquisition apparatus further includes a position sensor, and the control information includes information detected by the position sensor, where before step S10, the adjusting method further includes step S2: setting multiple detection areas reachable to the reference object and making each detection area correspond to one piece of second control information, where each second control information corresponds to one memorized position; and step S10 includes detecting, by using the position sensor, a detection area at which the reference object is located to acquire corresponding second control information, where the control information includes the second control information.

Further, step S30 further includes: when the controller body simultaneously detects the first control information and the second control information, controlling, by the controller body, the second pedal arm to be adjusted to the memorized position corresponding to the second control information.

By means of the motor vehicle pedal of the present invention, a control assembly is set, control information acquired by an information acquisition apparatus is made to correspond to a memorized position recorded by a memory apparatus, and after a position of a second pedal arm changes, a controller body is capable of directly adjusting, according to corresponding control information, the second pedal arm to a corresponding recorded position, so as to achieve an objective of saving adjustment time.

### BRIEF DESCRIPTION OF THE DRAWINGS

The accompanying drawings in this specification which constitute a part of this application are intended to provide further understanding of the present invention. Exemplary embodiments of the present invention and description thereof are intended to explain the present invention, without constituting an improper limit to the present invention. In the accompanying drawings:

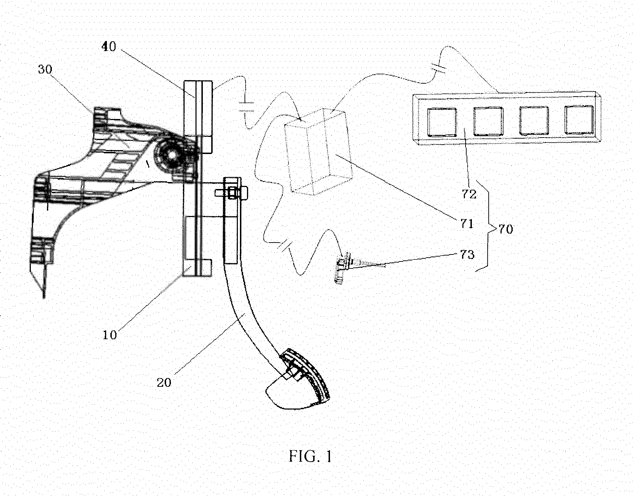

FIG. 1 is a schematic structural diagram of connections of a motor vehicle pedal according to an embodiment of the present invention.

Reference numerals in the drawings: 10. first pedal arm; 20. second pedal arm; 30. fixed base; 70. control assembly; 71. controller body; 72. control panel; 73. position sensor; 40. drive assembly.

### DETAILED DESCRIPTION

It should be noted that embodiments in this application and features in the embodiments can be combined without any conflict. The present invention is described in detail with reference to accompanying drawings and in combination with the embodiments in the following.

As shown in FIG. 1, an embodiment of the present invention provides a motor vehicle pedal, including a fixed base 30, a pedal arm and a control assembly 70. The pedal arm includes a first pedal arm 10 fixedly connected to the fixed base 30 and a second pedal arm 20 movably disposed along an extending direction of the first pedal arm 10. The control assembly 70 is electrically connected to the pedal arm, and the control assembly 70 includes a controller body 71, a memory apparatus and an information acquisition apparatus, where the controller body 71 is capable of acquiring, according to control information acquired by the information acquisition apparatus, a memorized position that is recorded by the memory apparatus and corresponds to the control information, and controlling the second pedal arm 20 to move to the memorized position.

The control assembly 70 is set, the control information acquired by the information acquisition apparatus is made to correspond to the memorized position recorded by the memory apparatus, and after a position of the second pedal arm 20 changes, the controller body 71 is capable of directly adjusting, according to corresponding control information, the second pedal arm 20 to a corresponding recorded position, so as to achieve an objective of saving adjustment time.

In this embodiment of the present invention, the information acquisition apparatus includes a position sensor 73, and the control information includes position information, detected by the position sensor 73, of a reference object. The reference object includes a motor vehicle seat.

The position sensor 73 detects a position of the motor vehicle seat, so as to change the position of the second pedal arm 20. When the motor vehicle seat is located at a different position, the controller body 71 adjusts, according to the position of the motor vehicle seat, the second pedal arm 20 to a corresponding position, thereby achieving an objective of automatically adjusting the second pedal arm 20 according to the position of the seat.

Preferably, the control assembly 70 further includes a control panel 72 connected to the controller body 71, and the information acquisition apparatus includes selection buttons disposed on the control panel 72. Multiple selection buttons are disposed on the control panel 72, and each selection button corresponds to one memorized position.

In this embodiment of the present invention, the memory apparatus of the motor vehicle pedal is capable of memorizing the position of the second pedal arm 20 and storing it as a memorized position. When a corresponding selection button on the control panel 72 is closed, the controller body 71 invokes the corresponding memorized position, and adjusts the second pedal arm 20 to the foregoing memorized position.

The control panel 72 is set. An operator may pre-store, according to a usage habit of the operator, a corresponding position of the second pedal arm 20 as a memorized position. When different operators operate a same vehicle, due to their different usage habits, as long as an operator presses a corresponding selection button, the controller body 71 is capable of invoking a corresponding memorized position and adjusting the second pedal arm 20 to the memorized position.

It should be noted that, the foregoing pedal arm in this embodiment of the present invention includes a drive assembly 40 for driving the second pedal arm 20 to move, and the controller body 71 is electrically connected to the drive assembly 40. The foregoing drive assembly 40 may be a drive motor or a drive cylinder.

An embodiment of the present invention further provides a method for adjusting a motor vehicle pedal, where the motor vehicle pedal is the foregoing motor vehicle pedal, and the method for adjusting a motor vehicle pedal includes the following steps: S10: Acquire the control information by using the information acquisition apparatus. S20: The controller body 71 acquires, according to the control information, the memorized position that is recorded by the memory apparatus and corresponds to the control information. S30: The controller body 71 controls the second pedal arm 20 to be adjusted to the memorized position.

Preferably, before step S10, the adjusting method further includes step S1: Make each selection button correspond to one piece of first control information, where each first control information corresponds to one memorized position. Step S10 includes acquiring corresponding first control information by acquiring a closed state of multiple selection buttons, where the control information includes the first control information.

Specifically, the memory apparatus records position information of the second pedal arm 20 to form a memorized position, and makes each memorized position correspond to control information that corresponds to one selection button. When an operator presses one of the multiple selection buttons, the selection button is closed, and the controller body 71 receives corresponding first control information, and invokes a corresponding memorized position according to the first control information. Subsequently, the controller body 71 gives a drive command to a drive assembly to make the drive assembly drive the second pedal arm 20 to be adjusted to the memorized position.

Further, before step S10, the adjusting method further includes step S2: Set multiple detection areas reachable to a motor vehicle seat and make each detection area correspond to one piece of second control information, where each second control information corresponds to one memorized position. Step S10 includes detecting, by using the position sensor 73, a detection area at which the motor vehicle seat is located to acquire corresponding second control information, where the control information includes the second control information.

Specifically, a position reachable to the motor vehicle seat is divided into an initial seat section, a terminal seat section, a first intermediate section, and a second intermediate section. When the motor vehicle seat is in the initial seat section, the position sensor 73 detects a position of the seat and provides second control information. The controller body 71 receives the second control information and invokes a corresponding memorized position, and in this case, the controller body 71 controls the drive assembly to drive the second pedal arm 20 to be automatically adjusted to a lowest point of the pedal arm, in a vertical direction, shown in FIG. 1, that is, a position in which the length of the pedal arm is longest.

When the seat is in the terminal seat section, the controller body 71 controls the second pedal arm 20 to be automatically adjusted to a highest point of the pedal arm, in the vertical direction, shown in FIG. 1, that is, a position in which the length of the pedal arm is shortest. When the position of the seat is in the remaining two areas, a working principle of the second pedal arm 20 is the same as the working principle described above, a difference is only in positions, and details are not described herein again.

Certainly, in this embodiment of the present invention, the detection area may further be divided into more areas, which is not limited to the foregoing division method.

Further, step S30 further includes: when the controller body 71 simultaneously detects the first control information and the second control information, controlling, by the controller body 71, the second pedal arm 20 to be adjusted to the memorized position corresponding to the second control information.

Specifically, when the position sensor 73 is turned on, that is, when a function, that the controller body 71 is capable of automatically adjusting the position of the second pedal arm 20 according to the position of the motor vehicle seat, runs normally, even if the selection button is closed, the second pedal arm 20 is still incapable of adjusting the second pedal arm 20 according to the first control information provided by the selection button. If the position of the second pedal arm 20 needs to be adjusted according to the first control information, the position sensor 73 needs to be turned off in advance, so that the controller body 71 is incapable of receiving the second control information from the position sensor 73.

As can be seen from the foregoing description, the embodiments of the present invention achieve the following technical effects: a control assembly is set, control information acquired by an information acquisition apparatus is made to correspond to a memorized position recorded by a memory apparatus, and after a position of a second pedal arm changes, a controller body is capable of directly adjusting, according to corresponding control information, the second pedal arm to a corresponding recorded position, so as to achieve an objective of saving adjustment time.

The foregoing descriptions are merely preferable embodiments of the present invention, but are not intended to limit the present invention. A person skilled in the art may make various modifications and changes to the present invention. Any modification, equivalent replacement, and improvement made without departing from the spirit and principle of the present invention shall fall within the protection scope of the present invention.

## Claims

1. A motor vehicle pedal, comprising a fixed base (30), wherein the motor vehicle pedal further comprises:
a pedal arm, comprising a first pedal arm (10) fixedly connected to the fixed base (30) and a second pedal arm (20) movably disposed along an extending direction of the first pedal arm (10); and
a control assembly (70), electrically connected to the pedal arm, wherein the control assembly (70) comprises a controller body (71), a memory apparatus and an information acquisition apparatus, and the controller body (71) is capable of acquiring, according to control information acquired by the information acquisition apparatus, a memorized position that is recorded by the memory apparatus and corresponds to the control information, and controlling the second pedal arm (20) to move to the memorized position.

2. The motor vehicle pedal according to claim 1, wherein the information acquisition apparatus comprises a position sensor (73), and the control information comprises position information, detected by the position sensor (73), of a reference object.

3. The motor vehicle pedal according to claim 2, wherein the reference object comprises a motor vehicle seat.

4. The motor vehicle pedal according to any one of claims 1 to 3, wherein the pedal arm comprises a drive assembly (40) for driving the second pedal arm (20) to move, and the controller body (71) is electrically connected to the drive assembly (40).

5. The motor vehicle pedal according to any one of claims 1 to 3, wherein the control assembly (70) further comprises a control panel (72) connected to the controller body (71), and the information acquisition apparatus comprises selection buttons disposed on the control panel (72).

6. The motor vehicle pedal according to claim 5, wherein multiple selection buttons are disposed on the control panel (72), and each of the selection buttons corresponds to one memorized position.

7. A method for adjusting a motor vehicle pedal, wherein the motor vehicle pedal is the motor vehicle pedal according to claim 1, and the method for adjusting a motor vehicle pedal comprises the following steps:
S10: acquiring the control information by using the information acquisition apparatus;
S20: acquiring, by the controller body (71), according to the control information, the memorized position that is recorded by the memory apparatus and corresponds to the control information; and
S30: controlling, by the controller body (71), the second pedal arm (20) to be adjusted to the memorized position.

8. The method for adjusting a motor vehicle pedal according to claim 7, wherein the control assembly (70) further comprises a control panel (72) connected to the controller body (71), and the information acquisition apparatus comprises multiple selection buttons disposed on the control panel (72), wherein
before step S10, the adjusting method further comprises step S1: making each of the selection buttons correspond to one piece of first control information, wherein each of the first control information corresponds to one memorized position; and
step S10 comprises acquiring corresponding first control information by acquiring a closed state of the multiple selection buttons, wherein the control information comprises the first control information.

9. The method for adjusting a motor vehicle pedal according to claim 8, wherein the information acquisition apparatus further comprises a position sensor (73), and the control information comprises information detected by the position sensor (73), wherein
before step S10, the adjusting method further comprises step S2: setting multiple detection areas reachable to the reference object and making each of the detection areas correspond to one piece of second control information, wherein each of the second control information corresponds to one memorized position; and
step S10 comprises detecting, by using the position sensor (73), a detection area at which the reference object is located to acquire corresponding second control information, wherein the control information comprises the second control information.

10. The method for adjusting a motor vehicle pedal according to claim 9, wherein step S30 further comprises: when the controller body (71) simultaneously detects the first control information and the second control information, controlling, by the controller body (71), the second pedal arm (20) to be adjusted to the memorized position corresponding to the second control information.
